# EUROPÄISCHE PATENTSCHRIFT

(11) **EP 0 805 362 B1**
(45) Veröffentlichungstag und Bekanntmachung des Hinweises auf die Patenterteilung: **26.03.2003**
(21) Anmeldenummer: 97100308.2
(22) Anmeldetag: 10.01.1997
(51) Int. Cl.: G01S 17/93

(54) **Verfahren zur Hinderniswarnung für tieffliegende Fluggeräte**
Method for low-flying aircraft for warning of obstacle
Procède d'avertissage d'obstacles pour aéronefs volant à basse altitude

(30) Priorität: 13.02.1996 DE 19605218
(43) Veröffentlichungstag der Anmeldung: 05.11.1997
(73) Patentinhaber: DORNIER GmbH, 88039 Friedrichshafen (DE)
(72) Erfinder: Eibert, Max, Dr.rer.nat., 88048 Friedrichschafen (DE); Schaefer, Christoph, Dr.-Dipl.-Math., 88048 Friedrichshafen (DE)
(74) Vertreter: Meel, Thomas

(56) Entgegenhaltungen:
- EP-A- 0 448 956
- DE-B- 2 643 526
- US-A- 3 076 961
- US-A- 4 792 904
- US-A- 4 902 126

## Beschreibung

Zur sicheren Erfassung von Hindernissen, die dem Piloten eines tieffliegenden Fluggeräts oder eines Fahrzeugs gefährlich werden können, reichen die natürliche Sicht, Restlichtverstärker oder Nachtsichtgeräte häufig nicht aus. Hochauflösende, bildgebende Entfernungsbildsensoren auf Laserradarbasis liefern zusätzlich Hindernisinformation. Das Problem besteht in der Auswertung und ergonomisch optimalen Darstellung dieser Zusatzinformation im Rahmen eines Gesamtsytems zur Hinderniswarnung für den manuell fliegenden Piloten. Eine besonders wichtige Klasse von Hindernissen sind hierbei Leitungen.

In der DE 26 43 526 B ist ein Verfahren zur Hinderniswarnung für Fluggeräte beschrieben, bei dem mittels eines Laser-Impulsmessers die vor dem Fluggerät liegende Landschaft abgetastet wird. Auf einem Display kommen nur solche Laserstrahlechos zur Anzeige, die im Verhältnis zu dem vorhergehenden Laserstrahlecho einen Sprung aufweisen. Somit entsteht auf dem Display ein Bild der Landschaft, dass nur die Rankonturen der Hindernisse enthält.

Aufgabe der Erfindung ist die Unterstützung des Piloten bei der sicheren Erfassung von Hindernissen.

Diese Aufgabe wird durch den Gegenstand des Hauptanspruchs und der Unteransprüche gelöst.
Durch den Gegenstand der Erfindung ergeben sich folgende Vorteile:
- Optimale Ergonomie durch eine graphische (nicht symbolische) Darstellung der Hindernisse; ein Mensch kann anhand von Objektkonturen sehr viel besser klassifizieren als jeder Algorithmus.
- Hinderniskonturen sind das graphisch "sparsamste" Mittel der Hindernisdarstellung ohne wesentlichen Informationsverlust; dies führt zu geringen Datenraten am Ausgang des Auswerterechners und zu einer minimalen Verdeckung des Basisbildes durch die zusätzliche Hindernisinformation.
- Das Verfahren zur Konturenextraktion nutzt den Informationsgehalt des Entfernungsbildes optimal aus; dies führt zu einfachen Algorithmen, die auch bei komplexen Hindernisszenen robust arbeiten, und zu geringer Rechenleistung, die beim Auswerterechner erforderlich ist.
- Für Entfernungsbildsensoren, deren Bildrate unter 25 Hz liegt, wurde eine Methode zur Synchronisation mit dem Basisbild entwickelt, die ohne Navigationsdaten auskommt.

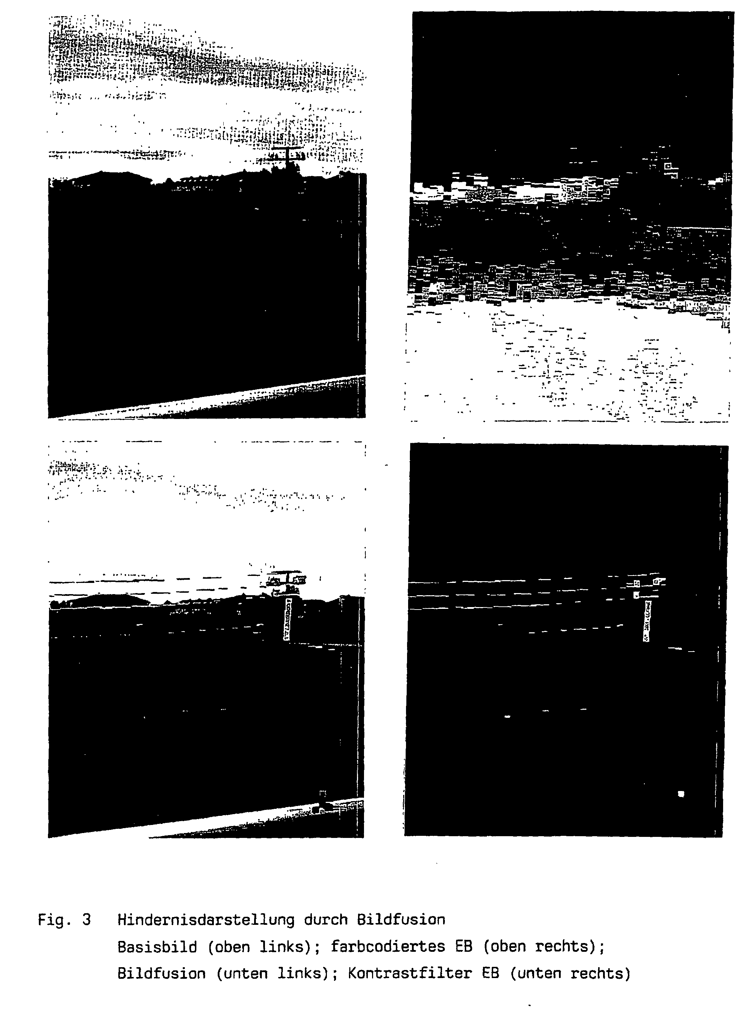

Die Erfindung wird anhand von Fig. 1 - 3 näher beschrieben. Es zeigen:
- Fig. 1: die Systemkomponenten einschließlich des Inputs und Outputs,
- Fig. 2: die Eigenschaft eines Entfernungsbildes, die Konturen von Hindernissen mit erhöhtem Kontrast abzubilden.
- Fig. 3: ein Basisbild, ein falschfarbenkodiertes Entfernungsbild, die Anwendung eines Hochpaßfilters auf ein Entfernungsbild und ein Basisbild mit nachgezeichneten Randkonturen von Hindernissen.

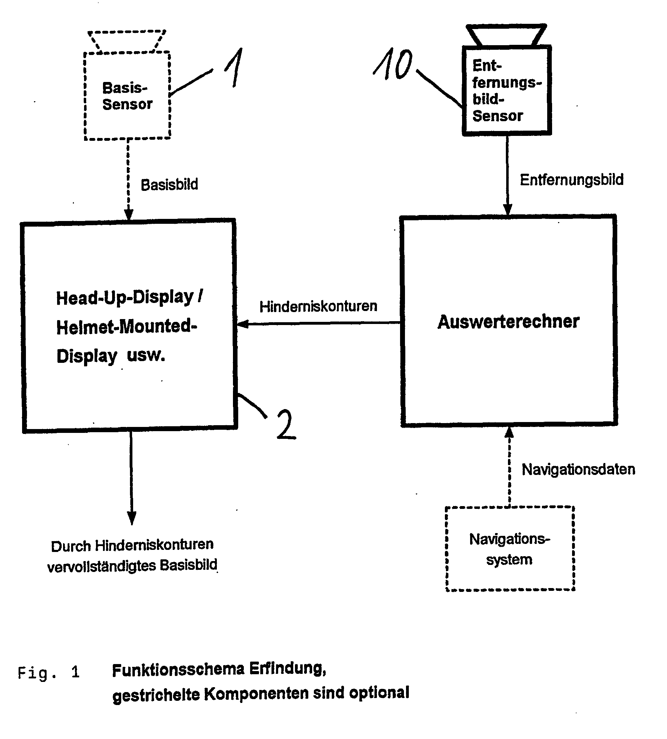

Das erfindungsgemäße Hinderniswarnsystem besteht aus einem Basissensor (gegebenenfalls mit Restlichtverstärker, Nachtsichtgerät), einem Entfernungsbildsensor, einem Auswerterechner zur Entfernungsbildverarbeitung, einem Display mit Einblendfunktion für ein zweites Bild zum Basisbild (z.B. Head-Up-Display, Helmet-Mounted-Display) sowie optional einem Navigationssystem. Fig. 1 stellt diese Systemkomponenten einschließlich ihres In- und Outputs dar.

Das Basisbild ist die natürliche Sicht aus dem Cockpitfenster des Fluggeräts oder das von einer Kamera aufgenommene und auf einem Display dargestellte Bild der vor dem Fluggerät liegenden Landschaft.

Da der Pilot nach dem Basisbild fliegt, wird die vom Entfernungsbildsensor zusätzlich generierte Hindernisinformation in dieses eingeblendet. Diese Zusatzinformation ist aus ergonomischen Gründen nicht alphanumerisch, symbolisch oder anderweitig abstrahiert, sondern besteht aus den realen, eindimensionalen Randkonturen der erfaßten Hindernisse mit denen die im bloßen Basisbild eventuell weniger gut abgebildeten Hinderniskonturen nachgezeichnet werden. Insgesamt vervollständigt das Hinderniswarnsystem das Basisbild, nach dem der Pilot fliegt oder fährt, durch die Randkonturen der Hindernisse im Entfernungsbild.

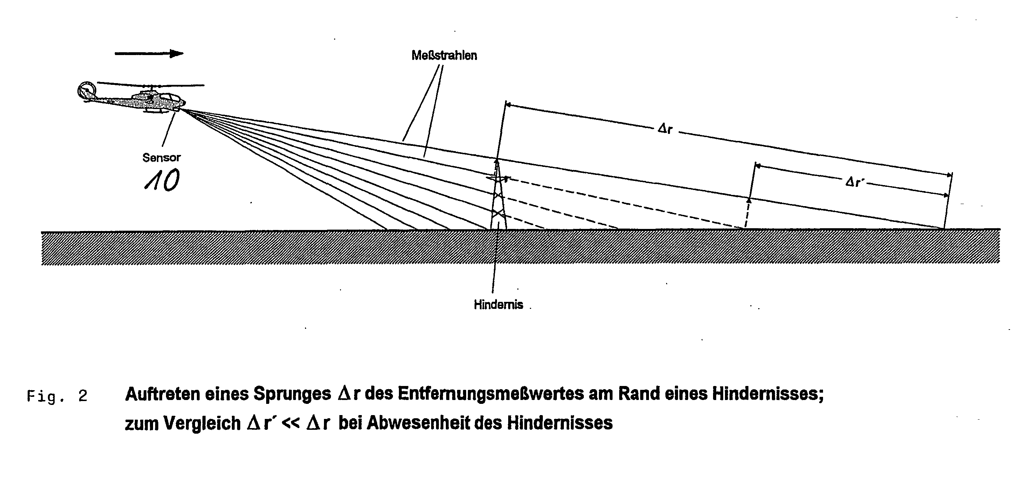

Dazu ist es erforderlich, daß der zusätzliche Sensor ein Entfernungsbildsensor ist. Denn nur das Entfernungsbild erlaubt die robuste Extraktion von Konturen beliebiger Hindernisse in Echtzeit. Dazu reicht es aus, im Entfernungsbild nach "Sprüngen" zwischen benachbarten Bildpixeln zu suchen. Ein stetig verlaufendes Gelände z.B. weist keine derartigen Sprünge auf. Jedes Hindernis im Gelände dagegen führt zu einem Sprung des Entfernungsmeßwertes an seinem Rand (Fig. 2). Hinderniskonturen sind daher im Entfernungsbild durch Hochpaßfilter extrahierbar.

Bei Entfernungsbildsensoren, die eine geringere Bildfrequenz als 25-30 Hz besitzen, ergibt sich bei der Einblendung in das Basisbild das Problem, daß wegen der raschen Änderung des Basisbildes die Lage einer einzublendenden Objektkontur nicht einfach aus dem Sensorbild übernommen werden kann. Es werden zwei Lösungen dieses Problems vorgeschlagen:

Bei Vorhandensein eines Navigationssystems kann die korrekte Lage der Hinderniskontur im Basisbild zu jedem Zeitpunkt aus dessen Lage im Entfernungsbild berechnet werden, unter Berücksichtigung des Bewegungsverlaufs des Fahrzeugs oder Fluggeräts in allen sechs Freiheitsgraden. Dazu ist lediglich eine entsprechende Software im Auswerterechner zu implementieren.

Eine kostengünstigere Lösung ist ohne Navigationssystem möglich. Der Entfernungsbildsensor generiert sein Bild in der Regel durch vertikalen oder horizontalen Scan, d.h. das Bild wird im Zeitverlauf zeilen- oder spaltenweise aufgebaut. Deshalb werden - z.B. bei vertikalem Scan - nur diejenigen Hinderniskonturen in das Basisbild eingeblendet, die in der aktuell generierten Entfernungsbildzeile auftreten. Deren Lage im Basisbild ist wegen der sehr geringen Totzeit zwischen der Erfassung im Entfernungsbild und der Einblendung im Basisbild bekannt. Beim weiteren Entfernungsbildaufbau verlöschen die eingeblendeten Objektkonturen nicht sofort sondern sie werden allmählich schwächer. Diese Darstellung wirkt auf den Piloten insgesamt wie ein vertikal durch sein Bild wandernder Streifen, der die Konturen von Hindernissen hervortreten läßt (ähnlich Radarschirm). Dieser Streifen besitzt dieselbe Frequenz wie der Bildaufbau beim Sensor. Je mehr sich diese Frequenz dem Wert 25 Hz nähert, desto besser wird die Ergonomie der Konturdarstellung.

Die Vorteile und Merkmale des erfindungsgemäßen Verfahrens zur Hinderniswarnung für Fahrzeuge oder tieffliegende Fluggeräte werden nachfolgend zusammengefaßt:
Verwendung geeigneter Software (digitale Hochpaßfilter) in Verbindung mit einer Entfernungsbildkamera zur datenmäßigen Erfassung der Umrisse ("Konturen") aller Hindernisse;
   - Robustheit, Echtzeitfähigkeit und geringe Komplexität der Software wegen des Informationsgehaltes des Entfernungsbildes
   - Extraktion graphischer statt symbolischer Information aus dem Entfernungsbild
   - hohe Datenredution durch Beschränkung auf die Konturen der Hindernisse.

Echtzeitbildfusion der gewonnenen graphischen Konturinformation mit dem Basisbild; nach dem der Pilot fährt/fliegt, als graphische Mensch-Maschine-Schnittstelle zwischen Pilot und Hinderniswarnsystem;
- optimale Ergonomie der Hinderniswarnung durch Einblendung realistischer, graphischer Hindernisinformation statt symbolischer Information
- minimale Beeinträchtigung des Basisbildes durch Einblendung bloßer Umrisse von Hindernissen
- Szeneninterpretation durch den Menschen, nicht durch die Maschine.

Echtzeitbildfusion innerhalb eines wandernden Streifens bei Entfernungsbildkameras mit Bildraten kleiner 25 Hz;
- auf ein präzises Fahrzeugnavigationssystem für die fehlerfreie Bildfusion kann für eine kostengünstigere Lösung verzichtet werden.

## Patentansprüche

1. Verfahren zur Hinderniswamung für tieffliegende Fluggeräte durch Sichtbarmachen der Hindernisrandkonturen, **gekennzeichnet durch** folgende Verfahrensschritte:
- Anwendung als Basisbild die natürliche Sicht aus einem Cockpitfenster oder Generierung eines Basisbilds mittels einer Kamera (1), die auf einem Display ein Bild der vor dem Fluggerät liegenden Landschaft liefert,
- Generierung eines Entfernungsbilds der vor dem Fluggerät liegenden Landschaft mittels eines Entfernungsbildsensors (10),
- Anwendung eines digitalen Hochpaßfilters auf das Entfernungsbild zur Extraktion der eindimensionalen Randkonturen der in der Landschaft vor dem Fluggerät befindlichen Hindernisse,
- Nachzeichnen der aus dem Entfernungsbild extrahierten eindimensionalen Randkonturen in dem Display des mittels einer Kamera generierten Basisbilds oder einem Head-up-Display (2), so dass die Hindernisse sichtbar werden.

2. Verfahren nach Anspruch 1 mit Entfernungsbildsensoren, die eine geringere Bildfrequenz als 25 bis 30 Hz besitzen, **dadurch gekennzeichnet, daß** der Entfernungsbildsensor das Entfernungsbild durch vertikalen oder horizontalen Scan generiert und das Entfernungsbild im Zeitverlauf zeilenweise oder spaltenweise aufgebaut wird, wobei nur diejenigen Hinderniskonturen in das Basisbild eingeblendet werden, die in der aktuell generierten Entfernungsbildzeile oder Entfernungsbildspalte auftreten und deren Lage wegen der geringen Totzeit zwischen der Erfassung im Entfernungsbild und der Einblendung im Basisbild bekannt ist und daß beim weiteren Entfernungsbildaufbau die bereits eingeblendeten Objektkonturen allmählich schwächer werden.

3. Verfahren nach Anspruch 1 mit Entfernungsbildsensoren, die eine geringere Bildfrequenz als 25-30 Hz besitzen und bei Vorhandensein eines Navigationssystems **dadurch gekennzeichnet, daß** die korrekte Lage der Hinderniskontur im Basisbild zu jedem Zeitpunkt aus dessen Lage im Entfernungsbild berechnet wird, unter Berücksichtigung des Bewegungsverlaufs des Fluggeräts in allen sechs Freiheitsgraden.

## Claims

1. Obstruction warning method for low-flying aircraft by making obstruction boundary contours visible, **characterized by** the following method steps:
- use as a basic image of the natural view from a cockpit window or generation of a basic image by means of a camera (1) which supplies an image on a display of the landscape located in front of the aircraft,
- generation of a range image of the landscape which is located in front of the aircraft, by means of a range image sensor (10),
- application of a digital high-pass filter to the range image in order to extract the one-dimensional boundary contours of the obstructions which are located in the landscape in front of the aircraft,
- redrawing of the one-dimensional boundary contours, which have been extracted from the range image, in the display of the basic image generated by means of a camera or on a head-up display (2), so that the obstructions are visible.

2. Method according to Claim 1 using range image sensors which have a lower frame rate than 25 to 30 Hz, **characterized in that** the range image sensor generates the range image by a vertical or horizontal scan, and the range image is formed in rows or columns over the course of time, with the only obstruction contours which are overlayed on the basic image being those which occur in the currently generated range image row or range image column and whose position is known owing to the short dead time between the detection in the range image and the overlaying in the basic image, and **in that** the already overlaid object contours gradually become weaker as the range image formation is continued further.

3. Method according to Claim 1 using range image sensors which have a lower frame rate than 25-30 Hz and in the presence of a navigation system, **characterized in that** the correct position of the obstruction contour in the basic image at any given time is calculated from its position in the range image, taking account of the movement profile of the aircraft in all six degrees of freedom.

## Revendications

1. Procédé avertisseur d'obstacles pour des aéronefs volant à basse altitude grâce à la visualisation des contours des bords des obstacles, **caractérisé par** les étapes suivantes du procédé :
- on utilise la vue naturelle à partir d'une fenêtre de cockpit comme image de base ou on génère une image de base au moyen d'une caméra (1) fournissant sur un affichage, une image du paysage s'étendant devant l'aéronef,
- on génère une image des distances du paysage s'étendant devant l'aéronef au moyen d'un capteur d'image des distances (10),
- on applique à l'image des distances, un filtre numérique passe-haut pour extraire les contours des bords à une dimension des obstacles se trouvant dans le paysage devant l'aéronef,
- on redessine les contours des bords à une dimension extraits de l'image des distances de l'image de base générée au moyen d'une caméra de manière à rendre visibles les obstacles sur l'affichage ou sur un affichage à tête haute ("Head-up-Display") (2).

2. Procédé selon la revendication 1 avec des capteurs d'image des distances possédant une fréquence d'image inférieure à 25 à 30 Hz, **caractérisé en ce que** le capteur d'image des distances génère l'image des distances par balayage vertical ou horizontal et **en ce que** l'image des distances est construite au fur et à mesure sous forme de lignes ou de colonnes où ne sont incrustées dans l'image de base, que ceux des contours d'obstacles qui se manifestent dans la ligne courante de l'image des distances ou dans la colonne courante de l'image des distances et dont la position est connue en raison du faible temps mort existant entre la saisie dans l'image des distances et l'incrustation dans l'image de base, et **en ce que** dans la suite de la construction de l'image des distances, les contours des objets déjà incrustés s'atténuent progressivement.

3. Procédé selon la revendication 1 avec des capteurs d'image des distances possédant une fréquence d'image inférieure à 25 - 30 Hz et en présence d'un système de navigation, **caractérisé en ce que** la position correcte du contour d'obstacles dans l'image de base est calculée à chaque instant à partir de sa position dans l'image des distances en respectant l'évolution du déplacement de l'aéronef dans tous les six degrés de liberté.
